# EUROPEAN PATENT SPECIFICATION

(11) **EP 2 886 464 B1**
(45) Date of publication and mention of the grant of the patent: **05.09.2018**
(21) Application number: 13199099.6
(22) Date of filing: 20.12.2013
(51) Int. Cl.: B64D 41/00, H02N 1/04

(54) **Energy harvester, aircraft component comprising the energy harvester and an aircraft comprising the energy harvester or the aircraft component**
Energiesammler, Flugzeugkomponente mit dem Energiesammler und Flugzeug mit dem Energiesammler oder der Flugzeugkomponente
Collecteur d'énergie, composant d'aéronef comprenant un tel collecteur et aéronef comprenant ledit collecteur ou le composant d'aéronef

(43) Date of publication of application: 24.06.2015
(73) Proprietor: Airbus Defence and Space GmbH, 85521 Ottobrunn (DE)
(72) Inventor: Becker, Thomas, 27711 osterholz-Scharmbeck (DE); Elefsiniotis, Alexandros, 81375 München (DE); Schmid, Ulrich, 1140 Wien (AT)
(74) Representative: Kastel, Stefan

(56) References cited:
- WO-A1-2012/067707
- US-A- 3 903 805
- US-A1- 2011 050 181
- US-B1- 7 592 783

## Description

The invention relates to an energy harvester comprising an energy storing unit. Furthermore, the invention relates to an aircraft component comprising the energy harvester. The invention also relates to an aircraft comprising the energy harvester and/or the aircraft component as described before.

Static electricity is a well-known effect of materials being in contact at first and then got released from each other. This effect can be enhanced by friction, called triboelectricity. A short description is given in Dominic Samson, Energy harvesting in aircraft with special focus on thermal electrics, Dissertation, TU Vienna, 2011: "If two bodies with different permittivities are put in contact, the one having the higher permittivity will be charged positively and the other will be charged negatively after they are separated. The corresponding current is called triboelectric current. If both materials are uncharged perfect conductors, the charge exchange during the contact is counterbalanced by an opposite charge exchange during separation. After the separation both materials are still neutral except if the separation process is very fast compared to the charged transfer. In the case of dielectric materials such as painted aircraft surfaces, the drift velocity of the charges is low in comparison to the separation speed and there is a residual charge."

An aircraft typically collects charges during cruising by air friction; these charges (which can be harmful for electric devices or communication systems) are being released by so-called static dischargers.

US 7 592 783 B1 describes a means for harvesting of P-Static electrical charge generated on external surfaces of an aircraft flying through the earth's atmosphere.

The objective of the invention is to provide an improved device for harvesting energy.

The objective is solved by the energy harvester according to claim 1. Preferred practical embodiments of the energy harvester are given in the further dependent claims.

The depending claims describe preferred embodiments of the invention.

Preferably, the charge collecting device is an element of the first portion that is exposed to an air flow. The charge collecting device may be constituted by different shapes. The permittivity of the charge collecting device differs from the one of air such that triboelectric charge is generated in the vicinity of and/or at the charge collecting device due to the air flowing by the charge collecting device. The air flow may be caused by the movement of the charge collecting device, for example when the charge collecting device is part of an aircraft or other vehicles such as high speed trains. In case of an aircraft, the air flow has a high velocity with respect to the charge collecting device. This may lead to the generation of high voltages at the charge collecting device.

The second portion is also configured to be exposed to air. For example, the second portion is arranged in the vicinity of the first portion, in particular to the charge collecting device. The second portion may include a layer of a conductive material partially or wholly covering the outer surface of the second portion, such that the conductive material is preferably exposed to the air. Alternatively, the second portion is completely made of a conductive material. The conductive material may be metal. The second portion is preferably electrically insulated from the first portion. The conductive material is advantageously highly conductive. The second portion may be considered as a so-called static discharger.

Preferably, the energy storing unit is electrically connected between the charge collecting device and the conductive material of the second portion via conductors such as wires. The energy storing unit is preferably provided for storing the electrical energy generated at the charge collecting device due to tribolelectric friction between the charge collecting device and the air flow.

The energy stored in the energy storing unit may be used to power an electric device of the aircraft, for example a sensor or a sensor node. The energy from the energy storing unit is predominantly consumed in a discontinuous way by the electric device depending on when information or the operation of the electric device is needed. This means for example that, in most cases, consumed energy cannot be correlated with the generation of energy. The energy storing unit might therefore be electrically disconnected from the electric device and only be connected when the electric device needs to operate, for example when the sensors are requested to provide certain parameters.

An effect of the energy harvester is that the charge generated at the first portion is directly stored in the energy storing unit. Hence, the efficiency of the energy harvester may be high. Further, the energy harvester can be easily manufactured due to the reduced number of parts, preferably reducing production costs.

In a preferred embodiment, the charge collecting device includes a plate-shaped surface for being exposed to the air flow, wherein preferably the surface is made of a dielectric material.

The provision of the plate-shaped surface may provide a large area where friction between the charge collecting device and the air flow occurs for producing triboelectricity. For example, the surface can be placed on the outer skin of an aircraft or other vehicles, such as high speed trains. If the charge collecting device, and in particular the plate-shaped surface that is exposed to the air flow, is made of a dielectric material, the amount of generated electric energy due to triboelectricity can be improved. The dielectric material may a paint of an aircraft.

In a preferred embodiment, the second portion includes an edge or an apex for locally increasing the electric potential of the second portion.

If the electric potential or the electrical field strength of the second portion, in particular the electric potential or the electrical field strength of the conductive material of the second portion, is increased, the second portion may be more prone to release electric energy to air or the air flow. Hence, the energy storing unit may be discharged more readily which in turn may increase the efficiency of the energy storing unit for powering the electric device. Preferably, the conductive material of the second portion exhibit the edge or the apex.

In a preferred embodiment, the second portion has the shape of a ridge, a cone, or a needle.

The mentioned shapes of the second portion, in particular of the conductive material of the second portion, constitute preferred embodiments in order to increase the electric potential. The tip of the cone or the wire can constitute an apex. The ridge may form an edge.

The second portion may be incorporated in sections of an aircraft or a vehicle which already have the shape of a ridge, a cone, or a needle and include a conductive material.

In a preferred embodiment, the energy storing unit comprises a capacitor.

A capacitor is a readily available embodiment of an energy storing unit and, therefore, may be cheap and easy to implement. In addition, the energy storing unit may also include an accumulator or a combination of an accumulator and a capacitor. The capacity of the capacitor may be in the range of millifarad to farad, for example 100 µF.

The invention also relates to an aircraft component comprising the above-mentioned energy harvester.

In particular, all the comments and/or the preferred advantages of the energy harvester described above apply for the aircraft component.

In a preferred embodiment, the aircraft component is a section of the fuselage of an aircraft wherein the charge collecting device is arranged on an outer surface of the fuselage.

The aircraft component may also be a wing of an aircraft. Preferably, the charge collecting device includes a surface that is arranged on the outer surface of the fuselage. This has the preferred advantage that the charge collecting device does not significantly increase the aerodynamic drag of the aircraft. For example, the charge collecting device may be an additional component which can be placed on the fuselage. In principal, it can be attached at any position of the aircraft, due to a different generation of friction charge across the aircraft surface (depending for example on the wind speed, the density of particles impinging on the aircraft surface); some location might be preferred. Furthermore, the charge collecting may be arranged such that the collection of tribocharges is done most efficiently and that they are transferred to the capacitor without losses. Other parts or elements of the first portion may be provided inside or in the fuselage.

In a preferred embodiment, the aircraft component is a section of the fuselage of an aircraft, wherein the charge collecting device is a portion of an outer surface of the fuselage.

In this embodiment, a separate charge collecting device is not required. Therefore, the outer surface of the fuselage may be partially or wholly used as a charge collecting device. In particular, portions of the paint of the fuselage may act as a charge collecting device.

In a preferred embodiment, the energy storing unit is arranged in the fuselage or on the inner surface of the fuselage, wherein preferably the second portion is arranged on the outer surface of the fuselage.

The arrangement of the energy storing unit in or inside on the inner surface of the fuselage may reduce the aerodynamic drag in comparison to arranging the energy storing unit on the outer surface of the fuselage. Wires can be used to electrically connect the energy storing unit with the first and/or the second portion.

In a preferred embodiment, the aircraft component is a rotor blade or fan blade, wherein preferably the charge collecting device is a separate element arranged on the blade.

The rotor blade or the fan blade may be blades of a jet engine or a propeller. The charge collecting device may be placed on the blade. This has the preferred advantage that the air flow due to the movement of the blade is very high. Consequently, the generated triboelectric charge may also be high.

In a preferred embodiment, the energy storing unit and/or all the second portions are also arranged on the blade, in particular the same blade.

This may provide a compact design of the energy harvester on a blade as an aircraft component.

The invention also relates to an aircraft comprising the energy harvester as described above and/or the aircraft component as described above.

In summary, the invention discloses different embodiments for using triboelectricity for energy harvesting purposes. Energy harvesting (or scavenging) denotes all methods to generate electrical energy from ambient energy sources. Ambient energy sources are heat, electromagnetic (for example solar radiation) and kinetic energy (for example mechanical vibrations). A special case is to remote transmission of energy via ultrasound or electromagnetic fields. Energy harvesting is being used for powering or low power sensors or actuators, preferably wirelessly connected to communication networks to make to the complete system fully autonomous. The application areas of triboelectric harvester are, but not limited to, fuselage areas of fixed wing aircraft, rotor blades of rotor crafts and fan blades of engines.

Preferred embodiments of the invention are further explained in more detail with reference to the enclosed drawings:
- Fig 1: a side view of an aircraft;
- Fig 2: a cross-sectional view along line I - I of Fig. 1; and
- Fig 3: a blade having an energy harvester;

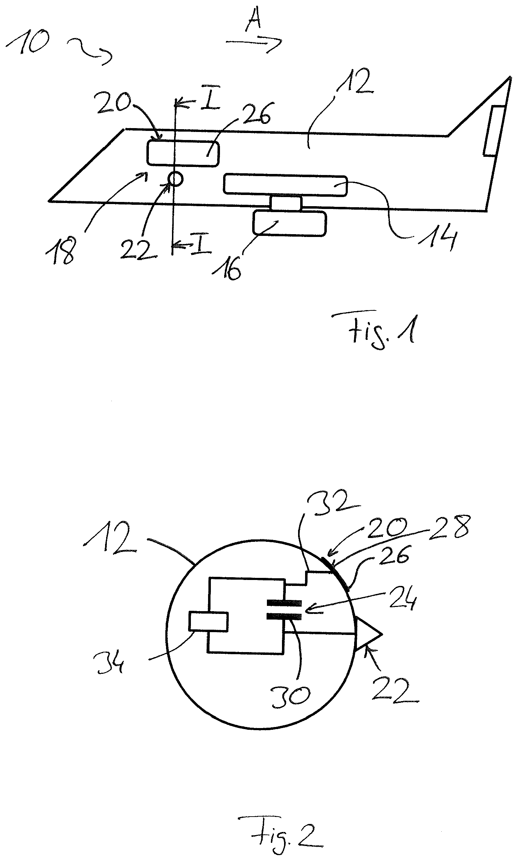

Initially referring to Fig. 1, an aircraft 10 is built up by aircraft components 11 such as a fuselage 12 and a wing 14. A jet engine 16 is mounted to the wing 14. An energy harvester 18 is also provided with the aircraft 10.

The energy harvester 18 as better seen in Fig. 2 includes a first portion 20, a second portion 22, and a third portion 24. The first portion 20 has a charge collecting device 26 that is arranged on the outer surface of the fuselage 12. The charge collecting device 26 is a plate-shaped member having a surface 28 that is exposed to an air flow A flowing by the aircraft 10.

The second portion 22 is made of metal and has the shape of a cone. The second portion 22 is arranged on the outer surface of the fuselage 12 in the vicinity of the charge collecting device 26 in order to be also exposed to the air flow A. The energy storing unit 24 is arranged inside the fuselage 12 and has a capacitor 30. The capacitor 30 is connected to the charge collecting device 26 and the second portion 22 via wires 32. The energy storing unit 24 is also electrically connected to an electric device 34. The electric device 34 is arranged inside the fuselage 12 in the embodiment shown in Fig. 2. The electric device 34 is a sensor.

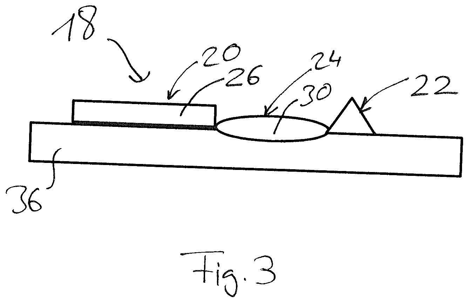

A second embodiment of the energy harvester 18 is shown in Fig. 3. The energy harvester 18 is arranged on a blade 36 of the jet engine 16. The first portion 20, the second portion 22 and the energy storing unit 24 are arranged on the blade 36. The charge collecting device 26 is separate from the blade 36 and arranged on it. The energy storing unit 30 and the second portion 22 are also arranged on the blade 36.

The function of the energy harvester 18 is as follows:
The air flow A passes by the charge collecting device 26 which generates charges at the charge collecting device 26 due to triboelectricity. The charges are supplied to the capacitor 30 in order to charge it. When the electric device 34 is required to be powered, the electricity stored in the capacitor 34 is used. To discharge the capacitor 34, the second portion 22 interacts with the air flow A. The charge of the capacitor 34 is transferred to the air flow A, most likely on the apex of the second portion 22 since the electrical potential of the second portion 22 is highest there.

### List of reference signs

- 10: aircraft
- 11: aircraft component
- 12: fuselage
- 14: wing
- 16: jet engine
- 18: energy harvester
- 20: first portion
- 22: second portion
- 24: energy storing unit
- 26: charge collecting device
- 28: surface
- 30: capacitor
- 32: wire
- 34: electric device
- 36: blade
- A: airflow

## Claims

1. An energy harvester, in particular for an aircraft (10), comprising
a first portion (20) including a charge collecting device (26) having an electrical permittivity different to the one of air, the charge collecting device (26) being configured to be exposed to an airflow (A),
a second portion (22) including a conductive material,
**characterized in that**
the energy harvester (18) further comprises an energy storing unit (24) electrically connected between the first portion (20) and the second portion (22), and
the second portion (22) is configured to be arranged in the airflow (A) in which the first portion (20) is arranged, to discharge the energy storing unit (24) by interaction with the airflow (A).

2. The energy harvester according to claim 1 **characterized in that** the charge collecting device (26) includes a plate-shaped surface (28) for being exposed to the air flow (A), wherein preferably the surface (28) is made of a dielectric material.

3. The energy harvester according to claim 1 or 2 **characterized in that** the second portion (22) includes an edge or an apex for locally increasing the electric potential of the second portion (22).

4. The energy harvester according to claim 3 **characterized in that** the second portion (22) has the shape of a ridge, a cone, or a needle.

5. The energy harvester according to one of the preceding claims **characterized in that** the energy storing unit (24) comprises a capacitor (30).

6. An aircraft component comprising an energy harvester (18) according to any of the claims 1 to 5.

7. The aircraft component according to claim 6 **characterized in that** the aircraft component (11) is a section of the fuselage (12) of an aircraft (10), wherein the charge collecting device (26) is arranged on an outer surface of the fuselage (12).

8. The aircraft component according to claim 6 **characterized in that** the aircraft component (11) is a section of the fuselage (12) of an aircraft (10), wherein the charge collecting device (26) is a portion of an outer surface of the fuselage (12).

9. The aircraft component according to one of the claims 6 to 8 **characterized in that** the energy storing unit (24) is arranged in the fuselage (12) or on the inner surface of the fuselage (12), wherein preferably the second portion (22) is arranged on the outer surface of the fuselage (12).

10. The aircraft component according to claim 6 **characterized in that** the aircraft component (11) is a rotor blade or a fan blade (36), wherein preferably the charge collecting device (26) is a separate element arranged on the blade (36).

11. The aircraft component according to claim 10 **characterized in that** the energy storing unit (24) and/or the second portion (22) are arranged on the blade (36).

12. An aircraft comprising
the energy harvester (18) according to any of the claims 1 to 5 and/or
the aircraft component (11) according to any of the claims 6 to 11.

## Patentansprüche

1. Energiesammler, insbesondere für ein Flugzeug (10), umfassend einen ersten Bereich (20), der eine Ladungssammelvorrichtung (26) mit einer elektrischen Permittivität aufweist, die sich von jener von Luft unterscheidet, wobei die Ladungssammelvorrichtung (26) dazu ausgebildet ist, einem Luftstrom (A) ausgesetzt zu sein,
einen zweiten Bereich (22), der ein leitfähiges Material aufweist,
**dadurch gekennzeichnet, dass**
der Energiesammler (18) weiter eine Energiespeichereinheit (24) umfasst, die zwischen dem ersten Bereich (20) und dem zweiten Bereich (22) elektrisch verbunden ist, und dass
der zweite Bereich (22) dazu ausgebildet ist, in dem Luftstrom (A) angeordnet zu sein, in dem der erste Bereich (20) angeordnet ist, um die Energiespeichereinheit (24) durch Wechselwirkung mit dem Luftstrom (A) zu entladen.

2. Energiesammler nach Anspruch 1, **dadurch gekennzeichnet, dass** die Ladungssammelvorrichtung (26) eine plattenförmige Fläche (28), um dem Luftstrom (A) ausgesetzt zu sein, aufweist, wobei vorzugsweise die Fläche (28) aus einem dielektrischen Material hergestellt ist.

3. Energiesammler nach Anspruch 1 oder 2, **dadurch gekennzeichnet, dass** der zweite Bereich (22) eine Kante oder eine Spitze zum lokalen Vergrößern des elektrischen Potentials des zweiten Bereichs (22) aufweist.

4. Energiesammler nach Anspruch 3, **dadurch gekennzeichnet, dass** der zweite Bereich (22) die Form eines Grates, eines Kegels oder einer Nadel hat.

5. Energiesammler nach einem der voranstehenden Ansprüche, **dadurch gekennzeichnet, dass** die Energiespeichereinheit (24) einen Kondensator (30) umfasst.

6. Flugzeugkomponente mit einem Energiesammler (18) nach einem der Ansprüche 1 bis 5.

7. Flugzeugkomponente nach Anspruch 6, **dadurch gekennzeichnet, dass** die Flugzeugkomponente (11) ein Abschnitt des Rumpfes (12) eines Flugzeugs (10) ist, wobei die Ladungssammelvorrichtung (26) an einer äußeren Fläche des Rumpfes (12) angeordnet ist.

8. Flugzeugkomponente nach Anspruch 6, **dadurch gekennzeichnet, dass** die Flugzeugkomponente (11) ein Abschnitt des Rumpfes (12) eines Flugzeugs (10) ist, wobei die Ladungssammelvorrichtung (26) ein Bereich einer äußeren Fläche des Rumpfes (12) ist.

9. Flugzeugkomponente nach einem der Ansprüche 6 bis 8, **dadurch gekennzeichnet, dass** die Energiespeichereinheit (24) in dem Rumpf (12) oder an der inneren Fläche des Rumpfes (12) angeordnet ist, wobei vorzugsweise der zweite Bereich (22) an der äußeren Fläche des Rumpfes (12) angeordnet ist.

10. Flugzeugkomponente nach Anspruch 6, **dadurch gekennzeichnet, dass** die Flugzeugkomponente (11) eine Rotorschaufel oder eine Gebläseschaufel (36) ist, wobei vorzugsweise die Ladungssammelvorrichtung (26) ein separates, an der Schaufel (36) angeordnetes Element ist.

11. Flugzeugkomponente nach Anspruch 10, **dadurch gekennzeichnet, dass** die Energiespeichereinheit (24) und/oder der zweite Bereich (22) an der Schaufel (36) angeordnet sind.

12. Flugzeug, umfassend
den Energiesammler (18) nach einem der Ansprüche 1 bis 5 und/oder die Flugzeugkomponente (11) nach einem der Ansprüche 6 bis 11.

## Revendications

1. Collecteur d'énergie, en particulier pour un aéronef (10), comprenant une première partie (20) comprenant un dispositif de collecte de charges (26) ayant une permittivité électrique différente de celle de l'air, le dispositif de collecte de charges (26) étant configuré pour être exposé à un flux d'air (A), une seconde partie (22) comprenant un matériau conducteur,
**caractérisé en ce que**
le collecteur d'énergie (18) comprend en outre une unité de stockage d'énergie (24) connectée électriquement entre la première partie (20) et la seconde partie (22), et
la seconde partie (22) est configurée pour être disposée dans le flux d'air (A) dans lequel la première partie (20) est agencée, pour décharger l'unité de stockage d'énergie (24) par interaction avec le flux d'air (A).

2. Collecteur d'énergie selon la revendication 1, **caractérisé en ce que** le dispositif de collecte de charges (26) comprend une surface en forme de plaque (28) destinée à être exposée au flux d'air (A), dans lequel la surface (28) est faite de préférence dans un matériau diélectrique.

3. Collecteur d'énergie selon la revendication 1 ou 2, **caractérisé en ce que** la seconde partie (22) comprend un bord ou un sommet pour augmenter localement le potentiel électrique de la seconde partie (22).

4. Collecteur d'énergie selon la revendication 3, **caractérisé en ce que** la seconde partie (22) a la forme d'une crête, d'un cône ou d'une aiguille.

5. Collecteur d'énergie selon l'une des revendications précédentes, **caractérisé en ce que** l'unité de stockage d'énergie (24) comprend un condensateur (30).

6. Composant d'aéronef comprenant un collecteur d'énergie (18) selon l'une des revendications 1 à 5.

7. Composant d'aéronef selon la revendication 6 **caractérisé en ce que** le composant d'aéronef (11) est une section du fuselage (12) d'un aéronef (10), dans lequel le dispositif de collecte de charges (26) est disposé sur une surface extérieure du fuselage (12).

8. Composant d'aéronef selon la revendication 6 **caractérisé en ce que** le composant d'aéronef (11) est une section du fuselage (12) d'un aéronef (10), dans lequel le dispositif de collecte de charges (26) est une portion d'une surface extérieure du fuselage (12).

9. Composant d'aéronef selon l'une des revendications 6 à 8 **caractérisé en ce que** l'unité de stockage d'énergie (24) est disposée dans le fuselage (12) ou sur la surface interne du fuselage (12), dans lequel la seconde partie (22) est disposée de préférence sur la surface extérieure du fuselage (12).

10. Composant d'aéronef selon la revendication 6 **caractérisé en ce que** le composant d'aéronef (11) est une pale de rotor ou une pale de soufflante (36), dans lequel le dispositif de collecte de charges (26) est de préférence un élément distinct disposé sur la pale (36).

11. Composant d'aéronef selon la revendication 10, **caractérisé en ce que** l'unité de stockage d'énergie (24) et / ou la seconde partie (22) sont agencées sur la lame (36).

12. Aéronef comprenant
le collecteur d'énergie (18) selon l'une des revendications 1 à 5 et/ou le composant d'aéronef (11) selon l'une des revendications 6 à 11.
